# FASCICULE DE BREVET EUROPEEN

(11) **EP 3 384 570 B1**
(45) Date de publication et mention de la délivrance du brevet: **05.02.2020**
(21) Numéro de dépôt: 16809498.5
(22) Date de dépôt: 18.11.2016
(51) Int. Cl.: H02G 3/08, B60R 16/02

(54) **AGENCEMENT DE TRAVERSÉE ÉTANCHE D'UNE OUVERTURE D'UN TABLIER SÉPARANT DEUX COMPARTIMENTS D'UN VÉHICULE AUTOMOBILE**
ANORDNUNG ZUR ABGEDICHTETEN PENETRATION EINER ÖFFNUNG EINER TRENNWAND ZUR TRENNUNG VON ZWEI KAMMERN EINES KRAFTFAHRZEUGS
ARRANGEMENT FOR SEALED PENETRATION OF AN OPENING OF A BULKHEAD SEPARATING TWO COMPARTMENTS OF A MOTOR VEHICLE

(30) Priorité: 02.12.2015 FR 1561706
(43) Date de publication de la demande: 10.10.2018
(73) Titulaire: Renault S.A.S., 92100 Boulogne-Billancourt (FR)
(72) Inventeur: GUIGNARD, Fabrice, 78280 Guyancourt (FR); BAILLY, Thierry, 78760 Jouars Pontchartrain (FR)
(86) Numéro de dépôt international: PCT/FR2016/053003
(87) Numéro de publication internationale: WO 2017/093631

(56) Documents cités:
- EP-A2- 1 091 465
- FR-A- 1 372 029
- FR-A1- 2 903 533

## Description

### DOMAINE TECHNIQUE DE L'INVENTION

La présente invention concerne un agencement de traversée étanche d'une ouverture d'un tablier séparant deux compartiments d'un véhicule automobile par au moins un toron de câbles.

La présente invention concerne plus particulièrement un agencement de traversée étanche d'au moins un toron de câbles par une ouverture de passage d'un tablier séparant deux compartiments d'un véhicule automobile comportant au moins un moyen d'emboitement fixé au tablier, au moins une bague de câblage en matériau plastique surmoulée sur au moins un toron de câbles.

### ÉTAT DE LA TECHNIQUE

Dans un véhicule automobile, certaines fonctionnalités nécessitent l'utilisation d'organes électroniques dans l'habitacle. Ces organes électroniques sont reliés par des câbles de connexion à d'autres organes ou accessoires, par exemple une batterie, qui ne se situent pas toujours dans le même compartiment du véhicule. Typiquement, à titre d'exemple, la batterie d'alimentation électrique du véhicule peut être située dans le compartiment moteur.

Pour simplifier le montage, les câbles de connexion électrique entre des organes électroniques du véhicule sont regroupés en torons de câbles, plus épais et plus rigides que les câbles simples, par exemple de plusieurs centimètres de diamètre. Les torons de câbles sont parfois liés avec un élément intermédiaire de connexion d'encombrement supérieur à celui du toron, comme par exemple une platine de relais.

Pour réaliser l'installation de ces organes électroniques, les torons de câbles doivent traverser des cloisons qui séparent les différents compartiments du véhicule. Ces cloisons, en général de tôle, sont aussi appelées tabliers.

La traversée d'un tablier se fait de manière classique à travers une ouverture circulaire réalisée dans ledit tablier. L'ouverture est percée au moment de la fabrication du tablier. Elle est dimensionnée de manière à permettre le passage du plus gros élément qui accompagne le ou les torons de câbles, tel qu'un élément intermédiaire de connexion.

On a donc besoin d'une ouverture de tablier bien plus large que le ou les torons de câbles qui la traverse une fois le montage et la connexion des éléments du véhicule terminés.

Les torons de câbles sont suffisamment longs pour assurer la connexion entre les organes et accessoires électroniques de part et d'autre du tablier du véhicule, sans ajout d'un câble intermédiaire et/ou de raccords intermédiaires. Les raccords intermédiaires ne sont en général pas souhaités car ils impliquent des éléments de connexion additionnels. Les éléments de connexion apportent au circuit une plus grande fragilité, et une moindre durabilité.

La cloison de séparation entre le compartiment moteur et l'habitacle du véhicule est conçue de manière à isoler l'habitacle. Pour le confort des passagers, on cherche à améliorer l'isolation phonique, surtout avec le compartiment moteur. Les contraintes d'isolation sont accompagnées d'une contrainte d'étanchéité. Cette contrainte permet d'éviter l'entrée dans l'habitacle de liquide et d'émanations provenant de l'environnement extérieur, mais aussi du moteur.

La traversée de tablier du véhicule automobile nécessite donc une solution qui permet de laisser passer les plus gros éléments portés par un ou plusieurs torons de câbles à travers l'ouverture prévue à cet effet, puis de refermer l'ouverture autour du ou des torons de câbles. Cette solution doit être étanche et elle doit permettre une isolation phonique adéquate. De plus, la solution doit être suffisamment simple à mettre en œuvre, pour ne pas augmenter le temps de montage en chaine des éléments du véhicule.

Selon une solution connue, on utilise une bague de caoutchouc surmoulée sur le toron de câbles et dont la circonférence est complémentaire à celle de l'ouverture du tablier.

Lors du montage, le toron est passé à travers l'ouverture jusqu'à la bague de caoutchouc. La bague est ensuite fixée de manière à fermer l'ouverture du tablier.

La fixation de la bague de caoutchouc se fait par emboitement sur les bords de l'ouverture du tablier. Cette opération demande de tirer le câble pour forcer la bague dans l'ouverture. Pour les véhicules modernes, la force déployée lors de la manœuvre est de plus en plus conséquente, notamment du fait de l'augmentation du diamètre des torons de câblage.

Les moyens de fixation (emboitement ou clipsage) des bagues ne sont plus adaptés au regard des efforts nécessaires au montage et au maintien du toron de câblage. Ces efforts sont parfois aptes à déplacer la structure sensiblement vide du véhicule et à la faire sortir de sa ligne de montage.

Une bague de caoutchouc suffisamment épaisse permet d'assurer l'isolation phonique de la traversée et son bon maintien sur la traversée.

En revanche dans le cas d'une bague traversée par plusieurs torons de câbles, l'étanchéité au niveau de la rencontre entre les torons de câbles n'est pas complète et peut engendrer des fuites. Ces fuites sont également préjudiciables pour l'isolation phonique du compartiment.

En outre, la bague de caoutchouc présente un encombrement radial très important qui est supérieur à l'encombrement radial de l'élément de connexion porté par le toron. Avec une telle solution, le toron équipé de sa bague est malaisé à manipuler.

Suivant une autre solution connue, on utilise un toron de câbles qui comporte une olive en matériau plastique surmoulée sur le toron. L'ouverture circulaire est équipée avec une pièce annulaire de traversée. La pièce annulaire de traversée comporte un moyen d'accrochage par emboitement déformable, sur l'ouverture du tablier. Cette pièce présente une ouverture centrale qui est suffisamment grande pour laisser passer l'élément de connexion encombrant lié au toron.

Le document FR2903533 divulgue une bague support de câblage électrique sur un tablier de véhicule automobile. Une plaque principale conformée à la découpe de passage du câble reçoit un élément à forme d'olive. Une plaque secondaire fixée de façon amovible à la plaque principale ou à la découpe du tablier, reçoit l'élément à forme d'olive à l'opposé de la plaque principale. Les plaques sont maintenues l'une à l'autre et forment à leur périphérie un couloir guide de coulissement pour faciliter leur pose. L'une des plaques peut comporter des crochets de clippage engagés dans des trous de l'autre plaque

L'olive comporte des moyens d'emboitement élastiquement déformable qui sont complémentaires de la pièce annulaire de traversée. L'olive comporte aussi des lèvres d'étanchéité, rabattables.

Le toron de câbles est inséré à travers l'ouverture du tablier jusqu'à l'olive en matière plastique. L'olive est alors poussée dans l'ouverture de manière à venir s'emboiter dans la pièce annulaire de traversée. Les lèvres d'étanchéité sont finalement rabattues pour terminer le montage.

Suivant cette solution, l'olive est suffisamment épaisse pour assurer l'isolation phonique de la traversée. Cette isolation est aussi assurée par l'ajout des lèvres rabattables. De plus, le montage par emboitement demande moins de force de poussée que dans la solution précédente.

En revanche, cette solution ne prévoie pas l'utilisation de plusieurs torons de câbles. Avec l'agrandissement de l'ouverture, cette solution perd sa garantie d'étanchéité. La fermeture par emboitement élastique est limitée par l'utilisation de matière déformable pour assurer le serrage.

De plus, l'olive est au moins aussi encombrante que l'élément de connexion porté par le toron.

Un autre inconvénient de cette solution est que son montage nécessite l'accès à toute la circonférence de l'ouverture côté moteur, pour rabattre les lèvres déformables. Cet accès n'est pas garanti dans tous les aménagements de moteur. En effet, il est fréquent d'avoir déjà monté des éléments de moteur, avant de passer les torons de câbles entre le compartiment moteur et l'habitacle. Il devient alors difficile d'accéder à toute la circonférence de l'ouverture avec une main portant un outil.

Le but de l'invention est de remédier aux problèmes soulevés par l'état de la technique. Et notamment, de proposer un agencement de traversée de tablier de véhicule automobile permettant de fermer de manière étanche une ouverture dans le tablier, dans laquelle passent un ou plusieurs torons de câbles en réduisant l'usage de matériaux de type caoutchouc afin d'améliorer les performances d'isolation phonique et également d'assurer un parfait maintient mécanique du toron de câblage sans risque de déboitement de la bague par les contraintes exercées par le toron sur la bague.

L'invention permet aussi un montage aisé même lorsqu'il est difficile pour l'opérateur d'accéder à toute la circonférence de l'ouverture du tablier.

L'invention permet finalement, un montage qui ne nécessite plus l'application d'un effort de montage important.

### BREF RESUME DE L'INVENTION

L'invention concerne un agencement de traversée étanche d'au moins un toron de câbles par une ouverture de passage d'un tablier séparant deux compartiments d'un véhicule automobile selon la revendication 1.

Ainsi, l'agencement permet une fermeture étanche de l'ouverture après la traversée d'un ou plusieurs torons de câbles, même dans le cas d'une ouverture élargie pour permettre le passage de platines support de relais et fusibles. Le montage de l'agencement ne demande pas de fournir une force de poussée particulière et le blocage est susceptible d'être réalisé par des éléments non déformables.

Selon d'autres caractéristiques de l'invention :
- l'étanchéité entre la plaque de fermeture et le tablier est assurée par au moins un joint d'étanchéité surmoulé.
- le moyen d'emboitement et le moyen de blocage sont positionnés sur deux bords, opposés de l'ouverture.
- la plaque de fermeture comporte un volume susceptible d'être comblé par un matériau isolant.
- l'agencement comporte un cerclage fixé autour de l'ouverture du tablier qui permet le maintien du moyen d'emboitement et du moyen de blocage.
- la bague de câblage comporte un plateau de positionnement de forme complémentaire à la plaque de fermeture et au logement de la bague de câblage.
- la bague de câblage est surmoulée sur plusieurs torons de câbles.
- le plateau de positionnement comporte au moins un bourrelet d'étanchéité entre le plateau de positionnement et la plaque de fermeture.
- la plaque de fermeture comporte au moins un rebord de protection contre des coulées de liquide au niveau des zones de contact avec le plateau de positionnement.
- l'agencement comporte un support de plaque destiné à supporter à la fois le logement du plateau de positionnement et le moyen d'emboitement.
- les moyens d'emboitement et de blocage sont soudés sur le tablier.
- l'agencement comporte au moins une goulotte d'orientation de la direction de traversée de l'ouverture du tablier par la bague de câblage.
- la bague de câblage comporte une butée de positionnement sur la goulotte d'orientation.
- le tablier comporte un volume pouvant être éventuellement comblé par un matériau isolant.
- la plaque de fermeture comporte un joint d'étanchéité, entre la plaque de fermeture et la bague de câblage d'une part et le tablier d'autre part.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue d'ensemble en perspective, qui représente une structure d'un véhicule automobile sur laquelle est visible une ouverture d'un tablier séparant deux compartiments du véhicule ;
- la figure 2 est une vue d'ensemble en perspective, qui représente un agencement de traversée étanche d'une ouverture d'un tablier, depuis le compartiment moteur, suivant un premier mode de réalisation de l'invention ;

- la figure 3 est une vue d'ensemble en perspective opposée à celle de la figure 2, qui représente l'agencement de traversée étanche d'une ouverture d'un tablier, depuis le compartiment habitacle, suivant le premier mode de réalisation de l'invention ;
- la figure 4 est une vue en perspective de face, d'une plaque de fermeture appartenant à l'agencement réalisé suivant le premier mode de réalisation de l'invention ;
- la figure 5 est une vue en perspective de derrière, de la plaque de fermeture de la figure 4 ;
- la figure 6 est une vue de derrière qui représente un support de plaque destiné à loger la bague de câblage et la plaque de fermeture appartenant à l'agencement suivant le premier mode de réalisation de l'invention ;
- la figure 7 est une vue en perspective de face qui représente une bague de câblage appartenant à l'agencement réalisé suivant le premier mode de réalisation de l'invention ;
- la figure 8 est une vue en section suivant le plan de coupe "A" de la figure 2, passant par l'axe d'une bague de câblage ;
- la figure 9 est une vue en section suivant le plan de coupe "B" de la figure 2 ;
- la figure 10 est une vue d'ensemble en perspective, d'un agencement de traversée étanche réalisé suivant un deuxième mode de réalisation de l'invention ;
- la figure 11 est une vue en perspective du tablier d'un véhicule automobile réalisé suivant le deuxième mode de réalisation de l'invention ;
- la figure 12 est une vue en perspective de derrière qui représente une plaque de fermeture appartenant à l'agencement réalisé suivant le deuxième mode de réalisation de l'invention ;
- la figure 13 est une vue en perspective qui représente une bague de câblage appartenant à l'agencement réalisé suivant le deuxième mode de réalisation de l'invention ;
- la figure 14 est une vue schématique qui représente une extrémité d'un toron de câbles liée à une platine de fusibles et relais.

### DESCRIPTION DETAILLEE DES FIGURES

Dans la suite de la description, des éléments présentant une structure identique ou des fonctions analogues seront désignés par des mêmes références.

On adoptera par convention et sans référence à la gravité terrestre, à titre non limitatif, des orientations longitudinale, verticale, transversale indiquées par le trièdre « L,V,T » des figures.

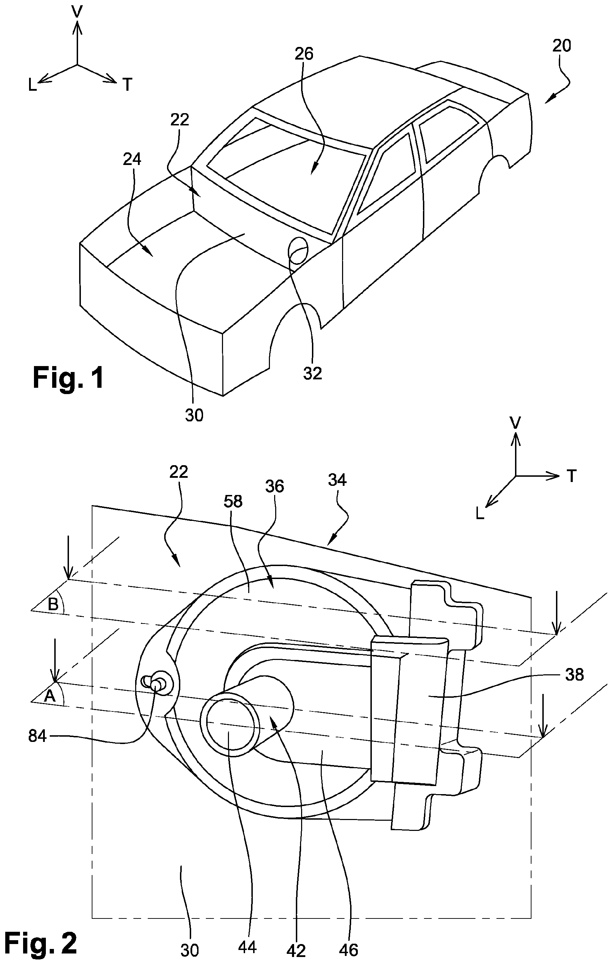

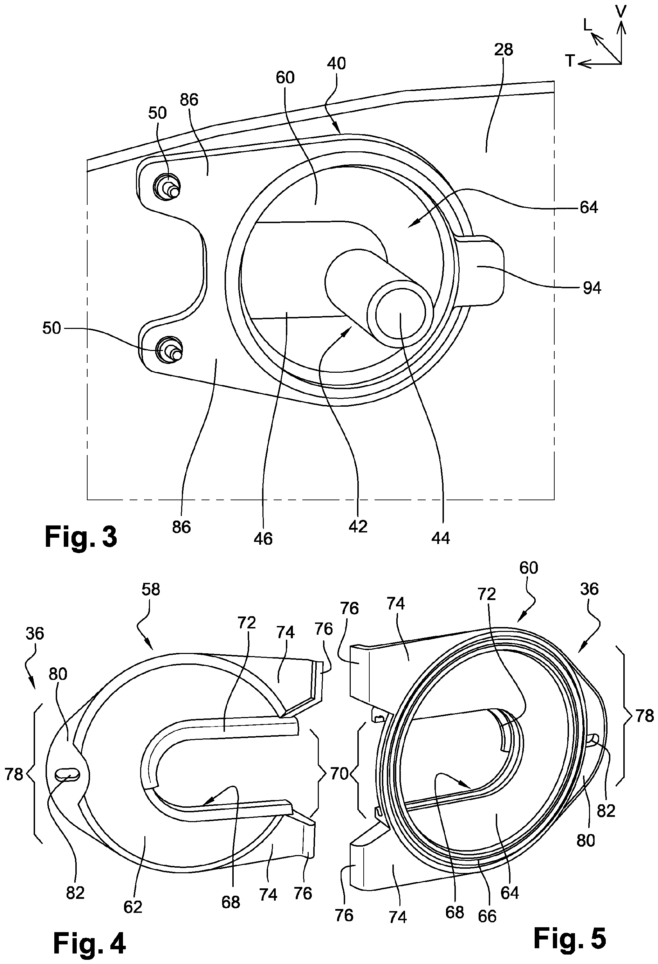

A la figure 1, on a représenté une structure 20 d'un véhicule automobile qui comporte un tablier 22 de séparation entre un compartiment 24 moteur et un autre compartiment formé ici par un habitacle 26. De manière classique, le tablier 22 s'étend dans un plan vertical-transversal du véhicule. Le tablier 22 présente ainsi une face 28 arrière qui est tournée vers l'habitacle, comme illustré à la figure 3, et une face 30 avant qui est tournée vers le compartiment moteur, comme illustré à la figure 2.

On a aussi représenté à la figure 1 une ouverture 32 qui traverse le tablier 22. L'ouverture 32 est de manière classique pratiquée du côté conducteur du véhicule pour permettre de réduire la longueur de câble entre le tableau de bord à l'intérieur de l'habitacle 26, qui comporte des organes électroniques du véhicule, et d'autres éléments de connexion et d'alimentation, tels que la batterie, qui sont situés dans le compartiment 24 moteur du véhicule. L'ouverture 32 est ici circulaire.

Aux figures 2 à 9, on a représenté un premier mode de réalisation d'un agencement 34 selon les enseignements de l'invention. L'agencement est vu depuis le compartiment 24 moteur du véhicule à la figure 2, et il est vu depuis l'habitacle 26 à la figure 3.

L'agencement 34 comporte une plaque 36 de fermeture, qui est logée dans un support 38 de plaque, et un cerclage 40.

L'agencement 34 comporte aussi une bague 42 de câblage surmoulée autour d'un toron 44 de câbles.

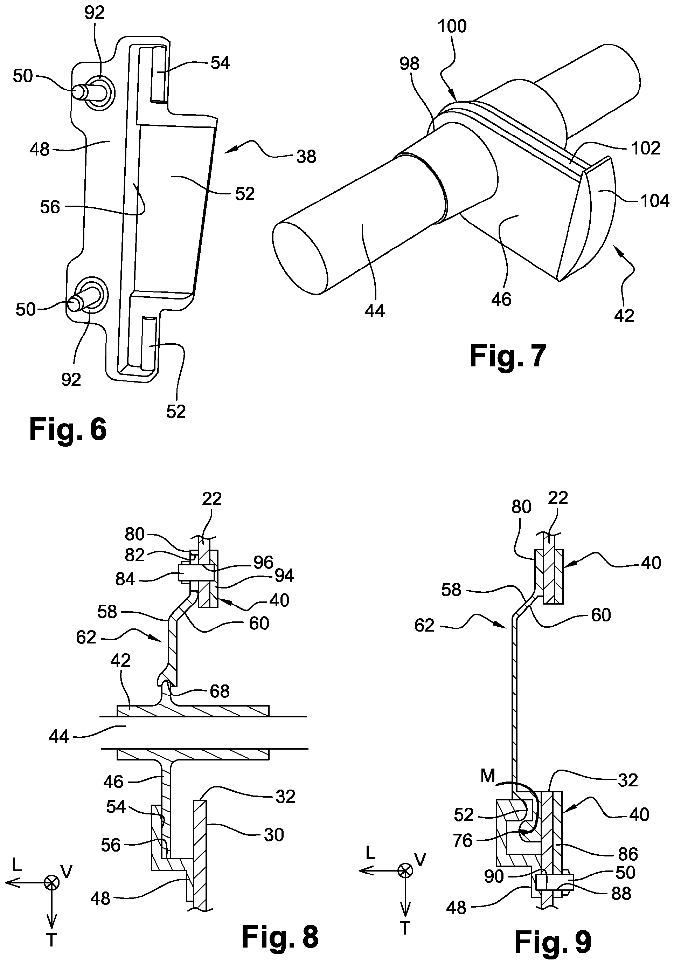

Comme représenté à la figure 7, la bague 42 de câblage comporte un plateau 46 de positionnement qui est destiné à être logé à la fois dans le support 38 de plaque et dans la plaque 36 de fermeture. Le plateau 46 s'étend radialement par rapport à l'axe du toron 44 de câbles, c'est-à-dire dans un plan vertical transversal.

A la figure 6, on a représenté une vue de derrière du support 38 de plaque. Le support 38 de plaque est une pièce de forme sensiblement rectangulaire dont la longueur s'étend sur un axe d'orientation verticale.

Le support 38 de plaque comporte une face 48 arrière de fixation qui est destinée à être plaquée contre la face 30 avant du tablier 22 du véhicule, transversalement à côté de l'ouverture 28, comme cela est représenté à la figure 2.

La face 48 arrière de fixation comporte des moyens 50 de fixation du support 38 de plaque sur le tablier 22 qui seront décrits plus en détails par la suite.

Le support 38 de plaque comporte un logement 52 qui est ouvert transversalement en direction de l'ouverture 28. Le logement 52 est destiné à recevoir une portion, d'une extrémité transversale libre du plateau 46 de positionnement, de la bague 42 de câblage.

Le logement 52 comporte une forme complémentaire à celle d'un tronçon d'extrémité transversale libre du plateau 46 de positionnement. Le logement 52 comporte une butée 56 de logement qui est formée par une face longitudinale tournée vers l'ouverture et qui est destinée à assurer le serrage du plateau 46 de positionnement de la bague 42 de câblage contre la plaque 36 de fermeture comme cela sera expliqué par la suite.

Le support 38 de plaque comporte aussi deux moyens 54 d'emboitement situés de manière symétrique verticalement de part et d'autre du logement 52. Chaque moyen 54 d'emboitement comporte une empreinte femelle destinées à être emboitée avec des moyens d'emboîtement complémentaires de la plaque 36 de fermetu re.

Les moyens 54 d'emboîtement permettent un coulissement limité de la plaque 36 de fermeture par rapport au tablier 22 pour permettre le serrage étanche de la bague 42 de câblage contre le logement 52 du tablier 22.

Aux figures 4 et 5, on a représenté des vues respectivement de face et de derrière de la plaque 36 de fermeture suivant le premier mode de réalisation de l'agencement 34.

La plaque 36 de fermeture est une plaque globalement transversale-verticale en matériau rigide, par exemple en plastique rigide, dont les dimensions permettent de recouvrir l'ouverture 32 du tablier 22.

Après le montage de l'agencement 34, la plaque 36 de fermeture présente une face 58 avant, orientée vers le compartiment 24 moteur du véhicule, comme représentée à la figure 4. La plaque 36 de fermeture présente aussi une face 60 arrière, orientée vers l'habitacle 26 du véhicule, comme représentée à la figure 5.

La plaque 36 de fermeture comporte une zone 62 centrale de circonférence sensiblement circulaire qui est destinée à obturer l'ouverture 32. La zone 62 centrale est bombée en direction du compartiment 24 moteur du véhicule. Ainsi la zone 62 centrale de la plaque 36 de fermeture est convexe sur la face 58 avant de la plaque 36, et concave sur la face 60 arrière de la plaque 36.

La face concave de la zone 62 centrale de la plaque 36 de fermeture délimite un volume 64 destiné à être comblé par un matériau isolant phonique.

Avantageusement, la face 58 avant de la plaque 36 de fermeture comporte des nervures de rigidifications (non représentées) pour interdire la déformation de la plaque 36 de fermeture.

La plaque 36 comporte un joint 66 d'étanchéité sur sa face 64 arrière. Le joint 66 est disposé autour de la zone 62 centrale. Le joint 66 est destiné à être serré longitudinalement entre la plaque 36 et la face 30 avant du tablier 22, après le montage de l'agencement. Le joint 66 permet l'étanchéité du contact entre la plaque 36 de fermeture et le tablier 22 du véhicule.

La plaque 36 comporte aussi une encoche 68 à la faveur de laquelle le toron 44 traverse le tablier 22. L'encoche 68 s'étend transversalement dans la zone 62 centrale depuis un bord 70 d'extrémité transversale ouvert jusqu'au centre de la plaque 36 de fermeture. L'extrémité de l'encoche 68 située au centre de la plaque présente ici une forme arrondie. L'encoche 68 comporte un contour complémentaire à celui du plateau 46 de positionnement de la bague 42 de câblage. Le bord de contour de l'encoche 68 est muni d'une gorge (non représentée) qui est destinée à assurer l'étanchéité de l'agencement à la jonction avec le plateau comme cela sera expliqué par la suite.

La partie supérieure de l'encoche 68 est bordée par un rebord 72 qui est apte à recouvrir la jonction entre la plaque 36 et le plateau 46 pour dévier un écoulement de liquide le long de la plaque 36 et protéger l'encoche 68 d'une intrusion de liquide.

Le bord 70 ouvert de la plaque 36 de fermeture comporte deux lames 74 transversales d'emboitement qui sont agencées verticalement de part et d'autre de l'encoche 68. Les lames 74 sont liées par une extrémité à la plaque 36 de fermeture, et elles comportent une extrémité opposée libre.

L'extrémité libre des lames 74 comporte un repli 76 qui s'étend longitudinalement en saillie vers l'avant. Chaque repli 76 est destiné à être emboité dans un moyen d'emboîtement associé du support 38 de plaque. Les replis 76 sont complémentaires des logements des moyens 54 d'emboitement. Les replis 76 sont reçus avec un jeu transversal dans les moyens d'emboîtement. La plaque 36, une fois emboîtée, est susceptible de coulisser transversalement avec un débattement limité par rapport au support comme cela est représenté à la figure 9.

La plaque 36 de fermeture comporte un bord 78 de blocage, opposé au bord 70 ouvert. Le bord 78 de blocage comporte une patte 80 qui s'étend transversalement en saillie. La patte 80 est percée par un trou 82 oblong de blocage. Le trou 82 de blocage est destiné à être traversé par un moyen 84 de blocage surmoulé dans le cerclage 40 qui lui, est fixé au tablier 22 pour permettre le maintien en position de la plaque 36 de fermeture sur le tablier 22 du véhicule.

Le trou 82 oblong permet à la plaque 36 d'être mobile en translation sur le plan du tablier 22 lors de son emboitement dans les moyens 54 d'emboitement.

Le moyen 84 de blocage permet de bloquer le coulissement de la plaque 36 lorsque l'agencement 34 est monté. La plaque 36 est alors fixée au tablier 22.

Comme on peut le voir à la figure 3, suivant le premier mode de réalisation, le support 38 et la plaque 36 de fermeture sont destinés à être fixés au tablier 22 par l'intermédiaire d'une contrepartie formée par un cerclage 40 qui est fixé contre la face 28 arrière du tablier 22 autour de l'ouverture 32.

Le cerclage 40 est de forme complémentaire à celle de l'ouverture 32. Le cerclage 40 est ici sensiblement circulaire. Il délimite radialement une lumière qui se superpose exactement à l'ouverture 32 du tablier 22. Le cerclage 40 forme un support de fixation pour la plaque 36 de fermeture et pour le support 38 de plaque.

Sur sa périphérie, le cerclage 40 comporte deux pattes 86 de support. Les pattes 86 de support s'étendent transversalement en saillie vers l'extérieur, depuis le cerclage 40.

Les pattes 86 de support sont situées de manière symétrique de part et d'autre d'un diamètre de la lumière.

Comme représentés à la figure 9, les pattes 86 de support comportent chacune un orifice 88, qui permet le passage des moyens 50 de fixation du support 38 de plaque. Les orifices 88 sont en vis-à-vis de trous 90, percés dans le tablier 22.

Les moyens 50 de fixation sont ici des boulons dont les vis sont surmoulées dans la face 48 de fixation du support 38 de plaque. Les moyens 50 de fixation comportent des joints 92 d'étanchéité, pour assurer l'étanchéité du passage des moyens 50 de fixation à travers le tablier 22.

Le cerclage 40 comporte aussi, sur sa périphérie, diamétralement opposé aux pattes 86 de support, un support 94 de blocage sur lequel est fixé le moyen 84 de blocage de la plaque 36 de fermeture. Le moyen 84 de blocage est destiné à coopérer avec la plaque 36 de fermeture à travers un trou 96, qui traverse le tablier 22 du véhicule, tel que représenté à la figure 8. Le trou 96 est percé préalablement au montage, par exemple lors de la fabrication du tablier 22.

Avantageusement, le moyen 84 de blocage comporte une tige filetée d'axe globalement longitudinal surmoulée dans le support 94 de blocage du cerclage 40, et un écrou.

Le contact entre le cerclage 40 et le tablier 22 est étanche. L'étanchéité est assurée par un ou plusieurs joints annulaires d'étanchéité (non représentés) qui entourent l'ouverture 32.

A la figure 7, on a représenté la bague 42 de câblage. La bague 42 est surmoulée sur un toron 44 de câbles. La bague 42 comporte un manchon 98 de maintien qui permet une plus grande surface de contact entre la bague 42 et le toron 44 de câbles.

La bague comporte le plateau 46 de positionnement fixé autour du manchon 98 de maintien. Le plateau 46 s'étend transversalement par rapport à l'axe principal du toron 44.

Le plateau 46 entoure complètement le manchon 98 de maintien pour venir en contact, d'une part avec la plaque 36 de fermeture, et d'autre part avec le support 38 de plaque. Le plateau 46 est en contact avec la plaque 36 de fermeture et le support 38 de plaque au niveau de sa tranche périphérique.

La tranche périphérique du plateau 46 de positionnement comporte une face 100 de serrage complémentaire à l'encoche 68 de la plaque 36 de fermeture.

La face 100 comporte au moins un bourrelet 102 qui est apte à se loger dans la gorge de l'encoche 68 pour assurer l'étanchéité entre le plateau 46 de positionnement et la plaque 36 de fermeture.

La tranche périphérique du plateau 46 de positionnement comporte aussi un bord plat d'extrémité transversale qui comporte une face 104 de butée. La face 104 de butée complète le pourtour du plateau 46 avec la face 100 de serrage. La face 104 de butée est disposée sur le bord du plateau 46 excentré du toron 44 de câbles.

La face 104 de butée est destinée à venir en butée contre la butée 56 du logement 52 du support 38 de plaque.

Avantageusement, le plateau 46 de positionnement comporte dans sa partie inférieure, un rebord (non représenté) apte à dévier une coulée verticale de liquide et renforcer l'étanchéité de la liaison entre le plateau 46 et la plaque 36 de fermeture.

Dans la suite de la description, le montage de l'agencement 34 va être expliqué en référence aux figures 2 à 9.

La première étape du montage consiste à fixer le cerclage 40 et le support 38 de plaque sur le tablier 22 du véhicule automobile. Comme décrit précédemment, le tablier comporte des trous 90 pour la traversée des moyens 50 de fixation du support 38 de plaque, et la traversée des moyens 84 de blocage de la plaque 36 de fermeture.

La vis surmoulée dans le support 94 de blocage du cerclage 40, des moyens 84 de blocage, est poussée à travers le tablier 22.

Les vis des moyens 50 de fixation du support 38 de plaque, sont poussées à travers le tablier 22 dans les orifices des pattes 86 de support du cerclage 40. Les vis des moyens 50 de fixation coopèrent avec des écrous pour effectuer la fixation du support 38 de plaque et du cerclage 40, sur le tablier 22.

Lors de cette étape, il n'est pas nécessaire d'accéder, avec des outils classiques de montage, à toute la périphérie de l'ouverture 32 du tablier 22. Seule la zone côté compartiment 26 habitacle, correspondant à la périphérie du cerclage 40 comportant les pattes 86 de support doit être accessible, pour le vissage des écrous des moyens 50 de fixation du support 38 de plaque.

Cela est un avantage dans le cas où l'ordre de montage prévoie le montage d'autres éléments du moteur avant celui de l'agencement de traversée du tablier.

Une fois le cerclage 40 et le support 38 de plaque fixés, le toron 44 de câbles est passé à travers l'ouverture 32 du tablier 22 depuis l'habitacle 26 vers le compartiment 24 moteur.

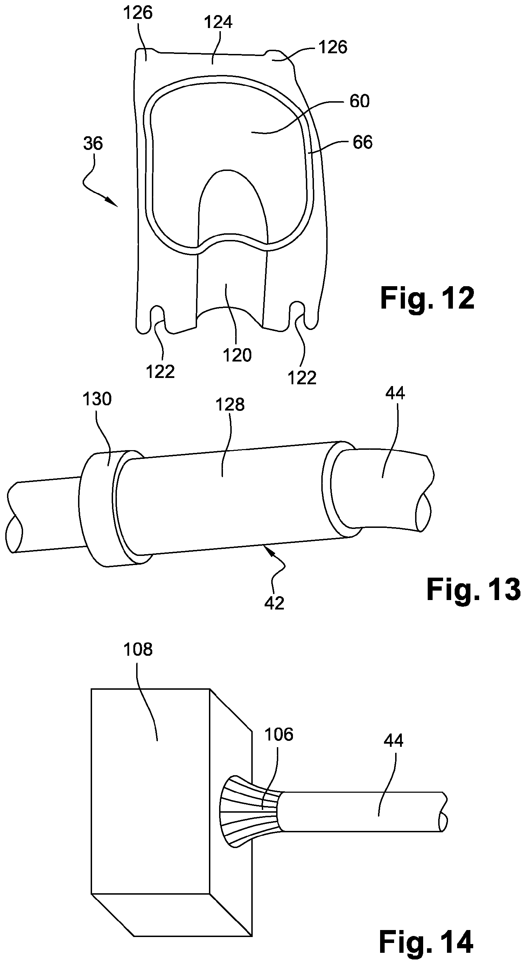

A la figure 14, on a représenté le toron 44 prolongé par des câbles 106 reliés à une platine 108 plus large que le toron. La grande taille de l'ouverture 32, plus d'une dizaine de centimètres, permet le passage aisé de la platine 108 de fusibles et relais.

Le toron 44 est inséré jusqu'au niveau de la bague 42 de câblage surmoulée. La bague 42 de câblage est passée à l'intérieur du compartiment 24 du moteur.

Dans le compartiment 24 moteur, la plaque 36 de fermeture est agencée autour de la bague 42 de câblage par insertion transversale du toron 44 dans l'encoche 68.

La face 100 de serrage du plateau 46 de positionnement de la bague 42 de câblage est enchâssée dans l'encoche 68 de la plaque 36 de fermeture. Le bourrelet 102 du plateau 46 de positionnement permet un maintien du plateau 46 dans l'encoche 68. Puis, l'extrémité transversale du plateau 46 est insérée transversalement dans le logement 52 du support 38.

La plaque 36 de fermeture portant la bague 42 de serrage est accrochée dans le support 38 de plaque par un mouvement circulaire d'emboitement. Ce mouvement est symbolisé par une flèche M à la figure 9.

Finalement, les replis 76 des lames 74 d'emboitement de la plaque 36 de fermeture viennent se loger dans l'empreinte complémentaire des moyens 54 d'emboitement du support 38 de plaque, comme illustré à la figure 9.

En position emboitée de la plaque 36 de fermeture, le trou 82 oblong de la plaque 36 de fermeture est traversé par la vis des moyens 84 de blocage du cerclage 40.

Le trou 82 oblong et les moyens 54 d'emboîtement du support 38 autorisent une translation de la plaque 36 de fermeture, sur le plan du tablier 22 en direction du support 38 de plaque, de manière à serrer le plateau 46 de positionnement entre la plaque 36 de fermeture et le support 38 de plaque.

Une fois la plaque 36 de fermeture emboitée dans les moyens 54 d'emboitement du support 38 de plaque, la plaque 36 de fermeture est poussée transversalement en glissant contre le tablier 22, en direction et sens du support 38 de plaque. Cette opération permet le serrage du plateau 46 entre la plaque 36 et le support 38 de plaque.

Une fois le serrage assuré, on procède alors au blocage de la plaque 36 de fermeture par le biais d'un écrou complémentaire à la vis des moyens 84 de blocage du cerclage 40.

Les opérations d'emboitement, de serrage, et de blocage ne nécessitent pas un accès à la totalité de la circonférence de l'ouverture 32 du tablier 22. Seule la zone du compartiment 24 moteur en regard des moyens 84 de blocage de la plaque 36 doit être accessible, par exemple par une main portant une visseuse, pour le vissage de l'écrou des moyens 84 de blocage de la plaque 36 de fermeture.

Après le montage de l'agencement 34, un matériau isolant, par exemple de la mousse isolante, peut être placé pour remplir le volume 64 de la face 60 vers l'habitacle de la plaque 36 de fermeture. Le matériau isolant est installé depuis l'habitacle 26 du véhicule.

L'agencement 34 ainsi réalisé permet de fermer complètement l'ouverture 32 du tablier 22 après installation d'un toron 44 de câbles entre l'habitacle 26 et le compartiment 24 moteur. L'étanchéité de la fermeture est assurée par le serrage de la plaque 36 sur le tablier 22 et par les moyens d'étanchéité présents entre les éléments de l'agencement 34. L'isolation phonique est assurée par l'ajout du matériau isolant dans la face 60 vers l'habitacle de la plaque 36 de fermeture.

Le montage de l'agencement 34 est possible avec un accès restreint à la circonférence de l'ouverture 32 sur la face 30 avant du tablier 22 du véhicule. Le montage est apte à être réalisé alors que des éléments du moteur gênent l'accès à une partie de l'ouverture 32.

De plus, le montage de l'agencement 34 n'implique pas de force susceptible de déplacer la structure 20 du véhicule. Le blocage de la plaque 36 de fermeture par vissage permet un blocage au couple, adapté au montage.

Suivant une variante, non représentée, de l'agencement, plusieurs torons de câbles passent par l'ouverture du tablier du véhicule.

L'agencement comporte alors une unique bague de câblage surmoulée sur les torons de câbles.

Suivant cette variante, tous les autres éléments de l'agencement restent inchangés par rapport au premier mode de réalisation. Le montage de l'agencement est aussi identique à celui du premier mode de réalisation.

Suivant cette variante de réalisation, l'agencement permet de garder tous les avantages du premier mode de réalisation. L'agencement permet aussi le passage de plusieurs torons de câbles à travers l'ouverture du tablier.

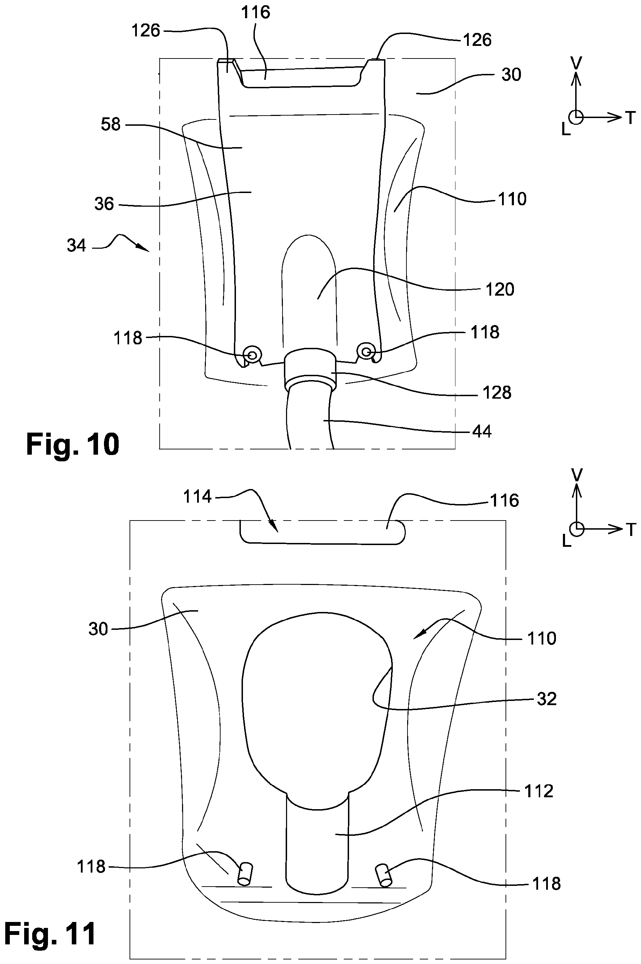

Un deuxième mode de réalisation de l'agencement 34 selon les enseignements de l'invention sera décrit en références aux figures 10 à 13.

A la figure 10, on a représenté une vue d'ensemble de l'agencement 34 depuis le compartiment 24 moteur du véhicule. L'agencement 34 comporte l'ouverture 32 du tablier 22 d'un véhicule automobile, la plaque 36 de fermeture, le toron 44 de câbles et la bague 42 de câblage surmoulée sur le toron 44 de câbles. Cependant, ces différents éléments présentent une forme et un agencement différents de ceux du premier mode de réalisation comme cela sera décrit par la suite.

A la figure 11, on a représenté le tablier 22 du véhicule, au niveau de l'ouverture 32 depuis le compartiment 24 moteur du véhicule. Le tablier 22 comporte dans sa face 30 avant une dépression locale en forme de cuvette par rapport au plan principal du tablier 22. La cuvette délimite un volume 110, formé directement dans le tablier 22, par emboutissage, autour de l'ouverture 32. Ce volume 110 peut permettre une fois l'agencement 34 monté, d'ajouter un matériau isolant sur le tablier 22, si nécessaire.

Le tablier 22 comporte aussi une goulotte 112 inférieure d'orientation, qui est emboutie dans le tablier 22. La goulotte 112 inférieure s'étend d'un bord de l'ouverture 32 jusqu'au plan principal du tablier à la périphérie du volume 110 du tablier 22. La goulotte 112 est de forme complémentaire à la bague 42 de câblage et elle est destinée à être en contact avec la bague 42 de câblage. La goulotte 112 constitue un demi-logement pour la bague 42 de câblage.

Sur un côté de la périphérie du volume 110, un support 114 de plaque est ici fixé par soudage sur le tablier 22. Le support 114 de plaque comporte des moyens 116 d'emboitement.

Sur la périphérie opposée du volume 110, des moyens 118 de blocage sont soudés sur le tablier 22 du véhicule. Avantageusement, les moyens 118 de blocage comportent deux systèmes vis-écrous de blocage.

Avantageusement, les moyens 118 de blocages sont disposés symétriquement de part et d'autre de la goulotte 112 inférieure d'orientation.

A la figure 12, on a représenté la face 60 arrière de la plaque 36 de fermeture. La plaque 36 de fermeture est de forme sensiblement rectangulaire. La plaque 36 comporte une goulotte 120 supérieure d'orientation, complémentaire de la bague 42 de câblage. La goulotte 120 supérieure s'étend depuis le centre de la plaque 36 jusqu'à un bord de la plaque 36.

La plaque 36 de fermeture comporte aussi des rainures 122 disposées sur un bord de la plaque 36 et destinées à être complémentaires des moyens 118 de blocage soudés sur le tablier 22.

Avantageusement, les rainures 122 sont disposées symétriquement de part et d'autre de la goulotte 120 supérieure d'orientation.

Sur le bord opposé aux rainures 122, la plaque 36 de fermeture comporte un repli 124 destiné à être emboité dans les moyens 116 d'emboîtement du support 114 de plaque. Le repli 124 est complémentaire des moyens 116 d'emboitement. Les moyens 116 d'emboîtement du support 114 permettent de recevoir le repli 124 avec un débattement vertical limité par des faces de butée (non représentées) des moyens 116 d'emboîtement.

Transversalement de part et d'autre du repli 124, la plaque 36 de fermeture comporte deux languettes 126 de positionnement. Ces languettes 126 permettent d'assurer le positionnement transversal du repli 124 contre le moyen 116 d'emboitement.

La plaque 36 de fermeture présente une forme courbée qui épouse le contour du volume 110 pour venir en contact avec le support 114 de plaque et le moyen 116 d'emboitement en périphérie du volume 110. La forme de la plaque 36 présente sur sa face 58 avant un volume 64 apte à être comblé par un matériau isolant.

La face 60 arrière de la plaque 36 de fermeture comporte un joint 66 d'étanchéité surmoulé. Le joint 66 d'étanchéité est positionné de manière à être plaqué contre le tablier 22 autour de l'ouverture 32 du tablier 22 lorsque la plaque 36 de fermeture est en contact avec le tablier 22.

Le joint 66 d'étanchéité forme un anneau fermé qui est aussi surmoulé dans la goulotte 120 supérieure de la plaque 36 en contact avec la bague 42 de câblage. Le joint 66 assure l'étanchéité du contact entre la plaque 36 et la bague 42 de câblage.

A la figure 13, on a représenté la bague 42 de câblage. La bague 42 de câblage est de forme sensiblement cylindrique de révolution. La bague 42 de câblage comporte un manchon 128 d'orientation et un collet 130 cylindrique pour le positionnement sur la goulotte 112 inférieure d'orientation.

Le manchon 128 d'orientation est complémentaire à la fois à la goulotte 112 inférieure d'orientation, et la goulotte 120 supérieure d'orientation. Le manchon 128 est destiné à être serré entre la goulotte 112 inférieure et la goulotte 120 supérieure d'orientation. Le manchon 128 est ainsi serré entre la plaque 36 de fermeture et le tablier 22.

Le collet 130 cylindrique est en saillie radialement par rapport au manchon 128 d'orientation. Le collet 130 est venu de matière avec la bague de câblage, et positionné à une extrémité de la bague 42 de câblage. Avantageusement, le collet 130 est positionné sur l'extrémité de la bague 42 de câblage qui est orientée vers l'habitacle 26 du véhicule.

Le montage de l'agencement 34, suivant le deuxième mode de réalisation commence par le passage du toron 44 de câbles à travers l'ouverture 32 du tablier 22, depuis l'habitacle 26 vers le compartiment 24 du moteur. La taille de l'ouverture 32 permet le passage d'éléments plus large que le toron 44 de câbles, et notamment le passage de platines 108 de fusibles.

Le toron 44 de câbles est inséré jusqu'au niveau de la bague 42 de câblage surmoulée. La bague 42 de câblage est passée à l'intérieur du compartiment 24 moteur du véhicule à l'exception de la butée 130 qui est placé en contact avec la face arrière du tablier 22 du véhicule. La bague 42 de câblage est insérée dans la goulotte 112 inférieure d'orientation, côté compartiment 24 moteur du tablier 22.

Une fois la bague 42 en position, la plaque 36 de fermeture est engagée dans le moyen 116 d'emboitement du support 114 de plaque par un mouvement circulaire d'engagement, de la même façon que dans le premier mode de réalisation. Les languettes 126 permettent un positionnement de la plaque 36 par rapport au support 114 de plaque.

La plaque 36 de fermeture est rabattue sur le tablier 22 de manière à ce que la goulotte 120 supérieure de la plaque 36 vienne en contact avec le manchon 128 d'orientation de la bague 42 de câblage.

Une fois la plaque 36 rabattue sur le tablier 22, les rainures 122 de la plaque 36 sont traversées par les vis des moyens 118 de blocage, soudées dans le tablier 22. Les écrous complémentaires des vis des moyens 118 de blocage sont montés pour effectuer le blocage de la plaque 36 de fermeture.

Le blocage de la plaque 36 de fermeture s'accompagne ici simultanément du serrage de la bague 42 de câblage entre la goulotte 112 inférieure et la goulotte 120 supérieure. Le joint 66 d'étanchéité assure l'étanchéité complète de l'agencement 34.

Le blocage de la plaque 36 ne nécessite qu'un accès limité à la circonférence de l'ouverture 32 du tablier 22. Seule la zone du compartiment 24 moteur qui correspond au moyens 118 de blocage de la plaque 36 doit être accessible, par exemple par une main portant une visseuse, pour visser l'écrou des moyens 118 de blocage de la plaque 36 de fermeture.

Une fois le montage terminé, un matériau isolant, par exemple de la mousse isolante, peut être appliqué côté compartiment 24 moteur dans le volume 110 du tablier et dans le volume 64 de la plaque 36 de fermeture.

Ce mode de réalisation permet de fermer complètement l'ouverture 32 du tablier 22 après installation d'un toron 44 de câbles entre l'habitacle 26 et le compartiment 24 moteur. L'étanchéité de la fermeture est assurée par le serrage de la bague 42 de câblage entre la plaque 36 de fermeture et le tablier 22. L'étanchéité est aussi assurée par le joint 66 d'étanchéité.

Ce mode de réalisation présente les mêmes avantages que le premier mode de réalisation, en termes d'isolation phonique.

De même que dans le premier mode de réalisation, le montage de l'agencement 34 ne nécessite pas de force susceptible de déplacer la structure 20 du véhicule sur une chaine de montage.

Le blocage et le serrage de la plaque 36 sont assurés simultanément avec précision, au couple de serrage.

De plus, suivant le deuxième mode de réalisation, la pénétration du toron 44 de câbles dans le compartiment 24 moteur est orientée par les goulottes 112, 120 d'orientations. Cela permet d'avoir un toron 44 de câbles qui ne perturbe pas la disposition des éléments du moteur.

Suivant une variante non représentée du deuxième mode de réalisation de l'agencement, plusieurs torons de câbles passent par l'ouverture du tablier du véhicule.

Suivant cette variante, la plaque de fermeture comporte autant de goulottes supérieures d'orientation des bagues de câblage qu'il y a de torons de câbles. Le tablier comporte aussi, autant de goulottes inférieures d'orientation qu'il y a de torons de câbles.

Suivant une autre variante non représentée, les goulottes d'orientation ne se situent pas entre les moyens de blocage, mais suivant des directions différentes.

Cette variante n'apporte aucune nouvelle contrainte dans le montage de l'agencement. Cette variante permet une plus grande flexibilité dans la direction d'entrée du toron de câbles dans le compartiment moteur.

## Revendications

1. Agencement (34) de traversée étanche d'au moins un toron (44) de câbles par une ouverture (32) de passage d'un tablier (22) séparant deux compartiments d'un véhicule automobile comportant :
- au moins une bague (42) de câblage, en matériau plastique surmoulée sur le ou les torons (44) de câbles ;
- un logement (52, 112) d'une portion de la bague (42) de câblage ;
- une plaque (36) de fermeture de l'ouverture (32) du tablier (22) ;
**caractérisé en ce que** l'agencement (34) comporte :
- au moins un moyen (54, 116) d'emboitement fixé au tablier (22) dans lequel est engagée la plaque (36) par un mouvement circulaire en limitant un coulissement de la plaque (36) de fermeture par rapport au tablier (22) pour permettre un serrage étanche de la bague (42) de câblage contre ledit logement (52, 112) ;
- au moins un moyen (84, 118) de blocage de la plaque (36) de fermeture sur le tablier (22) du véhicule de sorte que l'agencement (34) obture de manière étanche l'ouverture (32) du tablier (22).

2. Agencement (34) suivant la revendication 1, **caractérisé en ce que** l'étanchéité entre la plaque (36) de fermeture et le tablier (22) est assurée par au moins un joint (66) d'étanchéité surmoulé.

3. Agencement (34) suivant l'une quelconque des revendications 1 ou 2, **caractérisé en ce que** le moyen (54, 116) d'emboitement et le moyen (84, 118) de blocage sont positionnés sur deux bords opposés de l'ouverture (32).

4. Agencement (34) suivant l'une quelconque des revendications 1 à 3, **caractérisé en ce que** la plaque (36) de fermeture comporte un volume (64) destiné à être comblé par un matériau isolant.

5. Agencement (34) suivant l'une quelconque des revendications 1 à 4, **caractérisé en ce que** l'agencement (34) comporte un cerclage (40) fixé autour de l'ouverture (32) du tablier (22) qui permet le maintien du moyen (54, 116) d'emboitement et du moyen (84, 118) de blocage.

6. Agencement (34) suivant l'une quelconque des revendications 1 à 5, **caractérisé en ce que** la bague (42) de câblage comporte un plateau (46) de positionnement de forme complémentaire à la plaque (36) de fermeture et au logement (52) du support (38) de plaque.

7. Agencement (34) suivant la revendication 6, **caractérisé en ce que** la bague (42) de câblage est surmoulée sur plusieurs torons (44) de câbles.

8. Agencement (34) suivant l'une quelconque des revendications 6 ou 7, **caractérisé en ce que** le plateau (46) de positionnement comporte au moins un bourrelet (102) d'étanchéité entre le plateau (46) de positionnement et la plaque (36) de fermeture.

9. Agencement (34) suivant l'une quelconque des revendications 6 ou 8, **caractérisé en ce que** la plaque (36) de fermeture comporte au moins un rebord (72) de protection contre des coulées de liquide au niveau des zones de contact avec le plateau (46) de positionnement.

10. Agencement (34) suivant l'une quelconque des revendications 6 à 9, **caractérisé en ce qu'**il comporte un support (38) de plaque destiné à supporter à la fois le logement (52) de la portion de la bague de câblage, et le moyen (54, 116) d'emboitement.

11. Agencement (34) suivant l'une quelconque des revendications 1 à 5, **caractérisé en ce que** le moyen (84, 118) de blocage et le moyen (54, 116) d'emboitement sont soudés sur le tablier (22).

12. Agencement (34) suivant la revendication 11, **caractérisé en ce qu'**il comporte au moins une goulotte (112, 120) d'orientation de la direction de traversée de l'ouverture (32) du tablier (22) par la bague (42) de câblage.

13. Agencement (34) suivant la revendication 12, **caractérisé en ce que** la bague (42) de câblage comporte un collet (130) pour le positionnement sur la goulotte d'orientation.

## Patentansprüche

1. Anordnung (34) zur dichten Durchführung mindestens einer Kabellitze (44) durch eine Durchgangsöffnung (32) einer zwei Räume eines Kraftfahrzeugs trennenden Schutzwand (22), die aufweist:
- mindestens ein Kabelring (42) aus Kunststoff, der auf die Kabellitze(n) (44) aufgeformt ist;
- eine Aufnahme (52, 112) eines Abschnitts des Kabelrings (42);
- eine Verschlussplatte (36) der Öffnung (32) der Schutzwand (22);
**dadurch gekennzeichnet, dass** die Anordnung (34) aufweist:
- mindestens eine an der Schutzwand (22) befestigte Einsteckeinrichtung (54, 116), in die die Platte (36) durch eine kreisförmige Bewegung eingeführt wird, indem ein Gleiten der Verschlussplatte (36) bezüglich der Schutzwand (22) begrenzt wird, um ein dichtes Festklemmen des Kabelrings (42) gegen die Aufnahme (52, 112) zu erlauben;
- mindestens eine Einrichtung (84, 118) zum Blockieren der Verschlussplatte (36) auf der Schutzwand (22) des Fahrzeugs, damit die Anordnung (34) die Öffnung (32) der Schutzwand (22) dicht verschließt.

2. Anordnung (34) nach Anspruch 1, **dadurch gekennzeichnet, dass** die Dichtheit zwischen der Verschlussplatte (36) und der Schutzwand (22) durch mindestens eine aufgeformte Dichtung (66) gewährleistet wird.

3. Anordnung (34) nach einem der Ansprüche 1 oder 2, **dadurch gekennzeichnet, dass** die Einsteckeinrichtung (54, 116) und die Blockiereinrichtung (84, 118) auf zwei gegenüberliegenden Rändern der Öffnung (32) positioniert sind.

4. Anordnung (34) nach einem der Ansprüche 1 bis 3, **dadurch gekennzeichnet, dass** die Verschlussplatte (36) ein Volumen (64) aufweist, das dazu bestimmt ist, mit einem Isoliermaterial gefüllt zu werden.

5. Anordnung (34) nach einem der Ansprüche 1 bis 4, **dadurch gekennzeichnet, dass** die Anordnung (34) eine um die Öffnung (32) der Schutzwand (22) befestigte Einfassung (40) aufweist, die den Halt der Einsteckeinrichtung (54, 116) und der Blockiereinrichtung (84, 118) erlaubt.

6. Anordnung (34) nach einem der Ansprüche 1 bis 5, **dadurch gekennzeichnet, dass** der Kabelring (42) eine Positionierplatte (46) mit zur Verschlussplatte (36) und zur Aufnahme (52) des Plattenträgers (38) komplementärer Form aufweist.

7. Anordnung (34) nach Anspruch 6, **dadurch gekennzeichnet, dass** der Kabelring (42) auf mehrere Kabellitzen (44) aufgeformt ist.

8. Anordnung (34) nach einem der Ansprüche 6 oder 7, **dadurch gekennzeichnet, dass** die Positionierplatte (46) mindestens einen Dichtungswulst (102) zwischen der Positionierplatte (46) und der Verschlussplatte (36) aufweist.

9. Anordnung (34) nach einem der Ansprüche 6 oder 8, **dadurch gekennzeichnet, dass** die Verschlussplatte (36) im Bereich der Kontaktzonen mit der Positionierplatte (46) mindestens eine Randleiste (72) zum Schutz gegen Flüssigkeitsströme aufweist.

10. Anordnung (34) nach einem der Ansprüche 6 bis 9, **dadurch gekennzeichnet, dass** sie einen Plattenträger (38) aufweist, der dazu bestimmt ist, die Aufnahme (52) des Abschnitts des Kabelrings und die Einsteckeinrichtung (54, 116) zu tragen.

11. Anordnung (34) nach einem der Ansprüche 1 bis 5, **dadurch gekennzeichnet, dass** die Blockiereinrichtung (84, 118) und die Einsteckeinrichtung (54, 116) auf die Schutzwand (22) geschweißt sind.

12. Anordnung (34) nach Anspruch 11, **dadurch gekennzeichnet, dass** sie mindestens eine Rinne (112, 120) zur Ausrichtung der Richtung der Durchquerung der Öffnung (32) der Schutzwand (22) durch den Kabelring (42) aufweist.

13. Anordnung (34) nach Anspruch 12, **dadurch gekennzeichnet, dass** der Kabelring (42) einen Kragen (130) zur Positionierung auf der Ausrichtrinne aufweist.

## Claims

1. Arrangement (34) for passing, in a leak-tight manner, at least one cable strand (44) through a through-opening (32) in a bulkhead (22) separating two compartments of a motor vehicle, comprising:
- at least one cable ring (42) made of plastic material overmoulded onto the cable strand(s) (44);
- a recess (52, 112) for a portion of the cable ring (42) ;
- a plate (36) for closing the opening (32) in the bulkhead (22);
**characterized in that** the arrangement (34) comprises:
- at least one nesting means (54, 116) secured to the bulkhead (22), in which the plate (36) is engaged by a circular movement, limiting sliding of the closing plate (36) relative to the bulkhead (22) so as to permit leak-tight clamping of the cable ring (42) against said recess (52, 112);
- at least one means (84, 118) for immobilizing the closing plate (36) on the bulkhead (22) of the vehicle such that the arrangement (34) blocks, in a leak-tight manner, the opening (32) in the bulkhead (22).

2. Arrangement (34) according to Claim 1, **characterized in that** the leak-tightness between the closing plate (36) and the bulkhead (22) is ensured by at least one overmoulded seal (66).

3. Arrangement (34) according to either one of Claims 1 and 2, **characterized in that** the nesting means (54, 116) and the immobilizing means (84, 118) are positioned on two opposite edges of the opening (32).

4. Arrangement (34) according to any one of Claims 1 to 3, **characterized in that** the closing plate (36) comprises a volume (64) that is intended to be filled with an insulating material.

5. Arrangement (34) according to any one of Claims 1 to 4, **characterized in that** the arrangement (34) comprises a hoop (40) secured around the opening (32) in the bulkhead (22), which serves to hold the nesting means (54, 116) and the immobilizing means (84, 118).

6. Arrangement (34) according to any one of Claims 1 to 5, **characterized in that** the cable ring (42) comprises a positioning panel (46) whose shape matches the closing plate (36) and the recess (52) of the plate support (38).

7. Arrangement (34) according to Claim 6, **characterized in that** the cable ring (42) is overmoulded onto multiple cable strands (44).

8. Arrangement (34) according to either one of Claims 6 and 7, **characterized in that** the positioning panel (46) comprises at least one sealing flange (102) between the positioning panel (46) and the closing plate (36).

9. Arrangement (34) according to either one of Claims 6 and 8, **characterized in that** the closing plate (36) comprises at least one rim (72) for protection against flows of liquid at the regions of contact with the positioning panel (46).

10. Arrangement (34) according to any one of Claims 6 to 9, **characterized in that** it comprises a plate support (38) that is intended to support both the recess (52) for the portion of the cable ring, and the nesting means (54, 116).

11. Arrangement (34) according to any one of Claims 1 to 5, **characterized in that** the immobilizing means (84, 118) and the nesting means (54, 116) are welded onto the bulkhead (22).

12. Arrangement (34) according to Claim 11, **characterized in that** it comprises at least one chute (112, 120) for orienting the direction in which the cable ring (42) passes through the opening (32) in the bulkhead (22) .

13. Arrangement (34) according to Claim 12, **characterized in that** the cable ring (42) comprises a flare (130) for positioning on the orienting chute.
